Europäisches Patentamt

European Patent Office

Office européen des brevets

(11) Veröffentlichungsnummer: **0 046 936**
**B1**

(12) **EUROPÄISCHE PATENTSCHRIFT**

(45) Veröffentlichungstag der Patentschrift:
**21.11.85**

(51) Int. Cl.⁴: **B 29 C 65/04, H 01 F 7/20**

(21) Anmeldenummer: **81106485.6**

(22) Anmeldetag: **20.08.81**

(54) **Matrizenschweissspule.**

(30) Priorität: **26.08.80 DE 3032118**

(43) Veröffentlichungstag der Anmeldung:
**10.03.82 Patentblatt 82/10**

(45) Bekanntmachung des Hinweises auf die Patenterteilung: **21.11.85 Patentblatt 85/47**

(84) Benannte Vertragsstaaten:
**CH DE FR GB IT LI**

(56) Entgegenhaltungen:
DE-A- 2 742 294
DE-A- 2 825 953
FR-A- 1 394 039
FR-A- 1 461 000
FR-A- 2 189 184
FR-A- 2 228 552
GB-A- 1 319 679

(73) Patentinhaber: **Automation Industrielle SA**
**Route de Savoie**
**CH-1896 Vouvry (CH)**

(72) Erfinder: **Sander, Engelbert**
**CH. Vrebieux**
**CH-1896 Vouvry (CH)**
Erfinder: **Jeker, Rudolf**
**Ch. des Peupliers**
**CH-1896 Vouvry (CH)**

(74) Vertreter: **Patentanwälte Zellentin**
**Zweibrückenstrasse 15**
**D-8000 München 2 (DE)**

## Beschreibung

Die Erfindung betrifft eine Matrizenschweißspule zum Verbinden von Tubenrohrkörpern aus Verbundfolien mit metallischer Sperrschicht mit einem Tubenkopf durch Hochfrequenzinduktionsschweißen, bestehend aus einer mit einer axialen Bohrung versehenen zylindrischen Formmatrize und einer hohlen gegebenenfalls an eine Kühlmittelquelle anschließbaren mehrwindigen Induktionsspule.

Eine derartige Matrizenschweißspule ist aus der DE-A-26 28 014 bekannt. Hierbei besteht die als Preßwerkzeug dienende Matrize aus einem elektrischen Nichtleiter. Bekannte Matrizen bestehen aus keramischem Material. Mit diesem Preßwerkzeug arbeitet eine Induktionsspule zusammen. Da elektrische Nichtleiter generell insbesondere aber Keramik relativ schlechte Wärmeleiter sind, ist die Wärmeabfuhr aus dem Schweißbereich in kurzer Zeit nicht möglich, so daß die Anzahl der pro Zeiteinheit herstellbaren Schweißverbindungen gering ist. Ferner erwärmt sich mit der Zeit der Keramikkörper und bewirkt eine Veränderung der Oberfläche der äußeren Schichten der Tubenkopfschultern, d. h., der Kunststoff verliert seinen Glanz und wird matt, was sich negativ auf das Aussehen der Tube auswirkt. Außerdem besteht bei Keramikwerkstoffen immer eine Bruchgefahr bei Aufbringung des notwendigen Drucks beim Verschweißen, da sie spröde, hart und schlecht zu bearbeiten sind. Die Induktionsspule besteht aus einem Hohlleiter und kann dadurch mittels eines durch den Hohlleiter geführten Kühlmittels gekühlt werden, wie dies aus der DE-A-20 23 652 bekannt ist. Nach dieser Schrift soll zur besseren Wärmeableitung der den Rohrkörper tragende Dorn aus wärmeleitendem Aluminium und nur sein stirnseitig aufgesetzter Kopf aus nicht leitendem Material bestehen. Hierdurch wird jedoch die Wärmeableitung aus dem Schweißbereich nur unwesentlich verbessert. Aus dieser Schrift ist es bekannt, die Induktionsspule getrennt von der Preßmatrize oberhalb der Führungsbahn des Dorns anzuordnen und die zu verschweißenden Tubenteile mit aufgesetzter Matrize durch das Induktionsfeld der feststehenden Spule zu bewegen.

Die eingangs genannte DE-A- 26 28 014 gibt ferner die Anregung, die Induktionsquelle im Dorn anzuordnen und das Feld im Tubenrohr abzuschirmen, da dann die Möglichkeit besteht, die Preßmatrize aus Metall herzustellen, um die Abkühlzeit nach dem Schweißprozeß zu verkürzen. Diese Anordnung weist jedoch eine Fülle von Nachteilen auf, da die Spule und die erforderlichen Kühl- und Abschirmvorrichtungen im platzmäßig beschränkten Dorn untergebracht werden müssen, der zumeist noch in mehreren Richtungen beweglich sein muß, was Strom- und Kühlmittelprobleme mit sich bringt, und außerdem kann nur das Randfeld der Spule ausgenutzt werden.

Bei den bekannten Anordnungen ist es nicht möglich, durch spezifisch konzentrierte Magnetfelder bestimmte Stellen mehr oder weniger zu erwärmen, da die Spulenöffnung immer größer ist als der zu verschweißende Tubenkopf.

Aus der DE-A-22 25 928 ist eine Vorrichtung zum Verschließen von Flaschen aus nicht metallischem Material mit einer heißklebefähigen beschichteten Metallfolie mit einem Preßstempel aus isolierendem Material und einer an diesem befestigten Hochfrequenzspule bekannt. Hierbei ist der Hochfrequenzspule in Form einer wassergekühlten Induktorschleife ein aus einem geschlitzten Ring bestehender Konzentrator zugeordnet, der mit der Spule induktiv gekoppelt ist und mit dem die Metallfolie induktiv koppelbar ist. Schleife und Konzentrator sind voneinander durch einen Stoff hoher Wärmeleitfähigkeit elektrisch isoliert. Durch diese Vorrichtung ist einerseits keine hohe magnetische Kopplung erzielbar und da der Innendurchmesser und der Außendurchmesser der Schleife und des Konzentrators im wesentlichen gleich dem Flaschenhalsflansch sind, ist andererseits auch die Wirkung des Konzentrators gering, da er auch nur indirekt gekühlt ist erwärmt er sich, wodurch die Schweißbedingungen verändert werden.

Aus der DE-A-28 25 953 ist eine Vorrichtung zum Induktionsschweißen, insbesondere zum Abdichten einer Kunststoffabdeckung mit einer Metallfolie an einem Behältergehäuse bekannt, die einen elektrisch leitfähigen Pfad aus einer kühlbaren Metallplatte aufweist, in der eine Öffnung um den Schweißbereich herum gebildet ist, wobei zwischen dieser Öffnung und der äußersten Kante der Platte ein Isolierschlitz vorgesehen ist. Bei dieser einwindigen Spule muß die Öffnung die Form der zu verschweißenden Teile wiedergeben, so daß bei jeder Maßänderung eine neue Vorrichtung benötigt wird. Außerdem sind bei dieser Vorrichtung, um deren Wirksamkeit zu sichern, hohe Frequenzen erforderlich, was sich negativ auf den Preis zumindest der HF-Generatoren niederschlägt. Hauptnachteil ist jedoch, daß mit dieser Vorrichtung kein homogenes HF-Feld erzielbar ist, was sich negativ auf die Qualität der Schweißnaht auswirkt.

Aus der FR-A-1 394 039 ist ferner eine Spulenanordnung bekannt, die als Transformator ausgebildet ist und mit einem Impulsstrom arbeitet. Die mit Hilfe dieser Anordnung vorgenommene Formung der Werkstücke erfolgt durch die Wirkung eines starken Magnetfeldes. Hierzu wird an den, Seitenflächen eines radialen Schlitzes ein Strom zur Konzentratorfläche im Zentrum geleitet. Die Konzentration des Magnetfeldes ist dabei proportional zur Länge der im Zentrum der Spule vorgesehenen Arbeits- bzw. Konzentratorfläche. Dieser Spulenanordnung kommt jedoch nicht die Bedeutung einer Matrizenschweißspule, d. h. einer Spule mit der ein mechanischer Druck auf Formteile ausgeübt werden kann, zu.

Der Erfindung liegt die Aufgabe zugrunde, eine Matrizenschweißspule der eingangs genannten Art anzugeben, die es ermöglicht, den Verschwei-

ßprozeß von Tubenkörpern mit metallischer Sperrschicht mit einem Tubenkopf durch verbesserte Kühlung und, insbesondere bei Tubenköpfen, die eine metallische Sperrschicht aufweisen, zusätzlich durch gezielte Energieverteilung beim Verschweißen zu beschleunigen.

Die Aufgabe wird durch die im Kennzeichen des Anspruchs 1 wiedergegebenen Merkmale gelöst.

Durch diese Ausgestaltung der Matrize mit Spalt wird erreicht, daß die Metallmatrize nicht als Abschirmung des Magnetfeldes, sondern als Konzentrator wirkt, so daß der gesamte Feldfluß nur durch die axiale Öffnung gehen kann, und da Metall ein guter Wärmeleiter ist, kann auch im Schweißbereich eine nahezu optimale Wärmeableitung erzielt werden. Außerdem kann durch die metallene Matrize der für eine gute Versiegelung notwendige Druck ohne Gefahr des Bruchs der Matrize aufgebracht werden.

Vorteilhafte Ausgestaltungen sind in den Unteransprüchen wiedergegeben.

Durch die Ausführung gemäß Anspruch 2 wird erreicht, daß eventuell erweichtes Kunststoffmaterial nicht in den Schlitz gelangen kann, wodurch eine eventuell mögliche linienförmige Erhebung auf der Oberfläche des Schulterteiles vermieden wird. Durch die Ausgestaltung der Erfindung gemäß Anspruch 3 wird eine optimale Ausbildung des Induktionsfeldes gesichert. Durch die Maßnahme gemäß Anspruch 4 ist es einmal möglich, die gleiche Spule bei verschiedenen Tubenformen angepaßten Formmatrizen zu verwenden und andererseits die Formmatrizen mit den Tuben wandern zu lassen, womit eine weitere Geschwindigkeitssteigerung möglich ist.

Durch die Ausführung der Matrize gemäß Anspruch 5 kann ein Grundkörper der Matrize mit an verschiedene Tubenformen angepaßten Einsätzen versehen werden, so daß die Herstellungskosten gesenkt und gegebenenfalls auch die Umrüstzeiten erniedrigt werden.

Durch die Maßnahme gemäß Anspruch 6 wird eine aktive Kühlung erreicht.

Durch die Führungshülse gemäß Anspruch 7 wird ein leichtes Einführen und genaues Zentrieren des Dorns mit dem Rohrkörper und dem Kopf bezüglich der Spule gewährleistet. Die Isolierrondelle gemäß Anspruch 8 wird vorzugsweise dann eingesetzt, wenn der Tubenkopf eine wie eine Abschirmung wirkende Metallsperrschicht aufweist, so daß die Isolierrondelle direkt von einem erhöhten Nebenfeld durchdrungen wird, das in der Überlappungszone von Tubenkopf und Rohrkörper konzentriert wird. Die Befestigung der Isolierrondelle gemäß Anspruch 9 ermöglicht einerseits einen festen Sitz, andererseits aber auch ein leichtes Auswechseln und Befestigen einer anderen Isolierrondelle mit größerer oder kleinerer Dicke.

Nachstehend wird die Erfindung anhand von Ausführungsbeispielen unter Bezug auf Zeichnungen näher erläutert. Es zeigt :

Figur 1 ein Ausführungsbeispiel einer Matrizenschweißspule mit Isolierrondelle,

Figur 2 eine Ansicht von unten mit Durchsicht und Anschnitt auf die Matrizenschweißspule gemäß Fig. 1,

Figur 3 ein anderes Ausführungsbeispiel, bei dem der Spulenteil vom unterteilten Matrizenteil getrennt ist ohne Isolierrondelle.

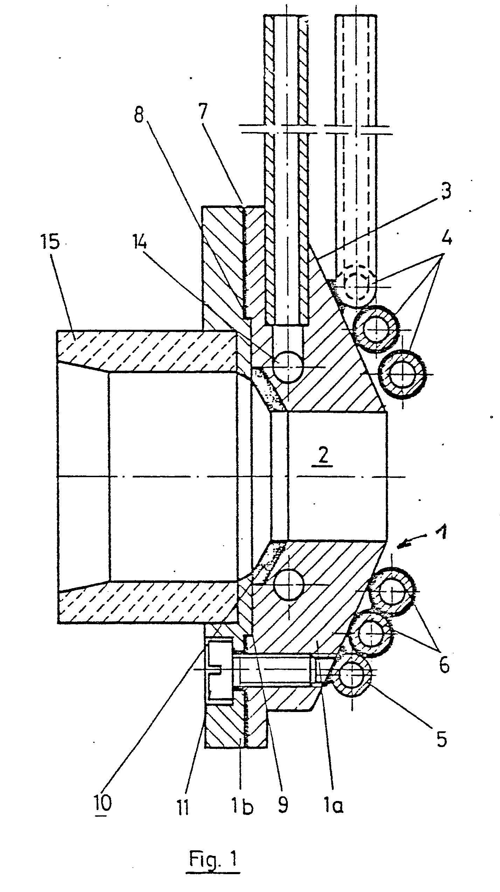

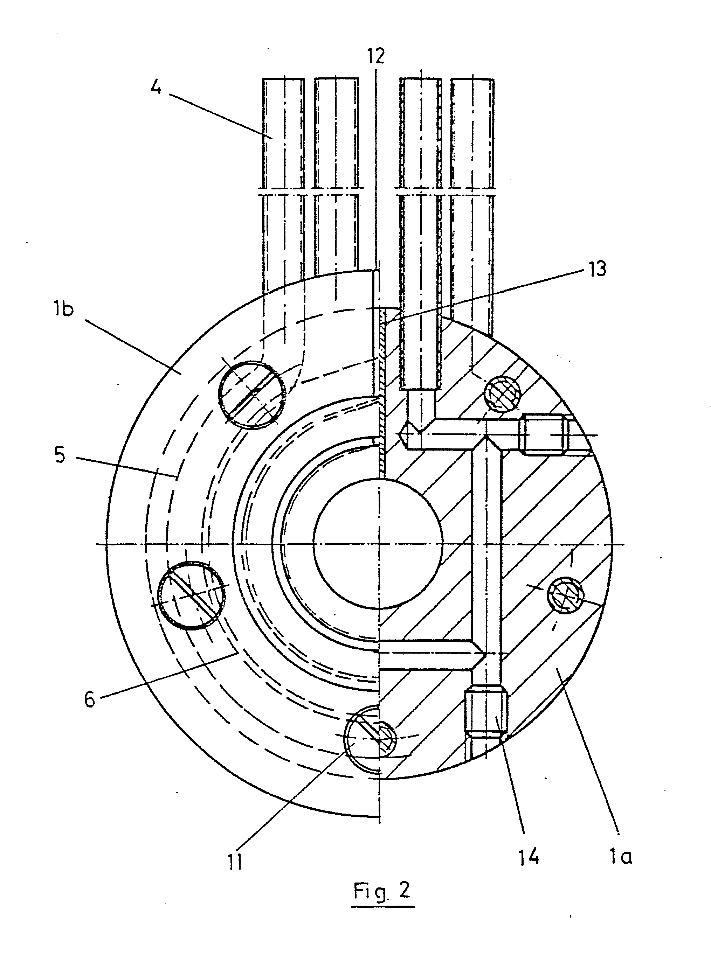

Die in Fig. 1 und 2 dargestellte Matrizenschweißspule weist eine aus einem oberen und einem unteren Teil 1a, 1b bestehende Formmatrize 1 aus einem Nichteisenmetall auf. Die Formmatrize 1 weist eine durchgehende axiale Bohrung 2 auf. Der obere Teil 1a weist eine kegelstumpfförmige Oberfläche 3 auf, auf der spiralförmig eine mehrwindige Induktionsspule 4 angeordnet ist. Die Hochfrequenzinduktionsspule ist mit etwa einer Windung 5 — der äußeren — auf der Matrize 1 aufgelötet und somit leitend mit ihr verbunden. Die weiteren Windungen 6 sind bezüglich der Formmatrize 1 isoliert angeordnet.

Der obere Teil 1a der Formmatrize 1 weist an der Unterseite 7 eine kreisförmige Aussparung 8 auf, in die ein entsprechender Vorsprung 9 des unteren Teils 1b der Formmatrize 1 eingeht. Zwischen dem oberen und unteren Teil 1a und 1b ist um die axiale Bohrung 2 eine Isolierrondelle 10 angeordnet. Die beiden Teile 1a und 1b sind durch Schraubverbindungen 11 lösbar miteinander verbunden und klemmen die Isolierrondelle 10 zwischen sich ein, so daß diese leicht auswechselbar ist. Die Aussparung 8 und der Vorsprung 9 dienen zum leichteren zentrierten Zusammenbau der Teile 1a und 1b der Formmatrize 1, wobei deren Höhe der größten Dicke der verwendeten Isolierrondelle 10 angepaßt ist, d. h., daß auch bei größter Dicke noch ein Eingriff des Vorsprungs 9 in die Aussparung 8 besteht. Die Formmatrize 1 weist an einer Seite einen radialen durchgehenden, möglichst schmalen Schlitz 12 auf. Der Schlitz 12 ist mit einer elektrisch nicht leitenden Füllmasse 13 gefüllt.

Die auf der Formmatrize 1 aufgelötete, d. h. elektrisch leitend verbundene eine Windung 5 beginnt an einer Seite des Schlitzes 12 und endet vor der anderen Seite, d. h. der Schlitz 12 wird nicht elektrisch leitend überbrückt.

Die Induktionsspule 4 ist als Hohlleiter ausgebildet und kann durch ein Kühlmittel gekühlt werden.

Die Matrize 1 weist ein System von Kanälen 14 zum Durchfluß eines Kühlmittels auf, wobei die Kanäle 14 im oberen und unteren Teil 1a und 1b oder nur in einem Teil 1a oder 1b angeordnet sein können.

Am unteren Teil 1b ist an seiner Unterseite eine Führungshülse 15 aus elektrisch nicht leitendem Material befestigt. Am freien Ende weist die Führungshüle 15 abgeschrägte Kanten zum leichteren Einführen der die Rohrkörper und Tubenköpfe tragenden Dorne auf. Die Führungshülse 15 ist so dimensioniert und angeordnet, daß sie den Dorn mit dem Rohrkörper gerade umfaßt und bezüglich der Induktionsspule 4 zentriert.

Die axiale Bohrung 2 ist im unteren Teil derart erweitert, daß sie die Außenform der fertigen Tubenschulter mindestens im Bereich der Verbindung von Kopf mit Rohrkörper wiedergibt. Diese Erweiterung kann nur im unteren Teil 1b oder auch im oberen Teil 1a ausgeführt sein, wobei die gegebenenfalls vorhandene Isolierrondelle 10 in die Formgestaltung einbezogen ist (s. Fig. 1).

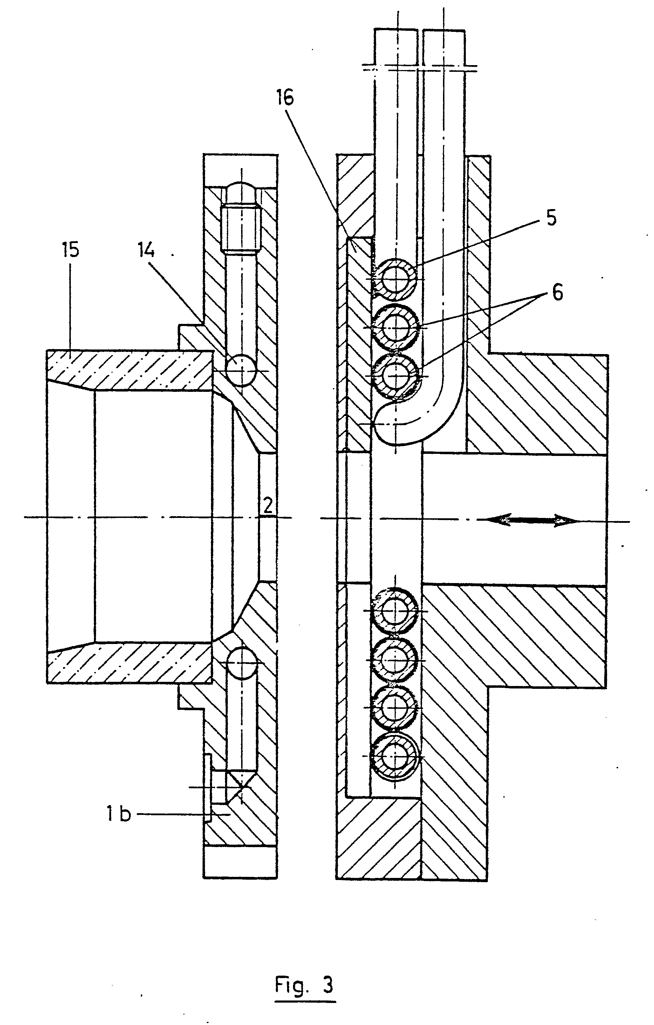

Bei dem in Fig. 3 dargestellten Ausführungsbeispiel ist das System der Kanäle 14 im unteren Teil 1b der Matrize 1 angeordnet. Die die Schulterform der herzustellenden Tube wiedergebende Innenform der Erweiterung der axialen Bohrung 2 ist nur in diesem Teil 1b enthalten. Die Spule 4 ist bei dieser Ausführung auf einer metallischen Konzentratorscheibe 16 mit Schlitz angeordnet und relativ bezüglich der Matrize 1 in deren Längsachse auf- und abbewegbar. Die Spulenwindung 5 und die Konzentratorscheibe 16 sind so angeordnet bzw. gestaltet, daß der Schlitz 12 der Matrize elektrisch nicht überbrückt wird.

Bei einem Tubenkopf ohne metallische Schicht wird der eine metallische Sperrschicht aufweisende Rohrkörper auf die Köpfschulter aufgeschoben ; durch das durch die Induktionsspule erzeugte Feld wird die Metallschicht in der Überlappungszone erwärmt und erweicht die ihr benachbarten Kunststoffschichten. Durch den durch die Matrizen aufgebrachten Druck wird die gewünschte feste Verbindung erzielt.

Weist der Tubenkopf ebenfalls eine metallische Sperrschicht auf, so wird darin durch das induzierte Feld ein Kurzschlußstrom bewirkt, der ebenfalls Wärme erzeugt und eine magnetische Reaktion erzeugt, die dem Hauptfeld entgegenwirkt.

Die Intensität der in der metallischen Schicht des Tubenkopfes induzierten Ströme kann durch die Isolierrondelle 10, die eine Aufteilung eines Teils des Feldes ermöglicht, bestimmt werden. Das Nebenfeld durchdringt direkt die Isolierrondelle 10 und wird in der Überlappungszone von Kopf und Tubenkörper konzentriert, wo es eine gezielte Erwärmung herbeiführt. Durch die Dicke der Isolierrondelle 10 kann die Intensität der induzierten Ströme variiert werden.

Der durch die Spule fließende Strom bewirkt den Aufbau eines Magnetfeldes, der durch die als Konzentrator wirkende Matrize 1 so beeinflußt wird, daß der ganze Feldfluß nur durch die Bohrung 2 geht. Die Konzentration des Feldes wird somit durch die Gestalt der Bohrung 2, besonders durch deren Öffnungsweite, aber auch durch deren Tiefe bestimmt. Durch geeignete Wahl der Öffnungsweite der Bohrung 2 der Matrize 1 und durch die Dicke der Isolierrondelle 10 kann eine gezielte Energieverteilung beim Verschweißen erzielt werden.

Die Matrize besteht vorzugsweise aus Messing, da diesem wegen seiner Härte der Vorzug vor Kupfer gegeben wird. Es sind jedoch alle Nichteisenmetalle einsetzbar.

Als Isolationsfüllmasse kann beispielsweise ein Zweikomponentenkunstharzkleber auf der Basis eines Epoxidharzes, z. B. Araldit, verwendet werden. Die Isolierrondelle kann beispielsweise aus Aluminiumoxid oder einem anderen Keramikmaterial, wie einem Glas mit anorganischen Füllstoffen gefertigt werden. Für die Führungshülse genügt ein Material von geringerer Härte, weshalb wegen der einfacheren Bearbeitbarkeit ein Kunststoff verwendet wird, z. B. ein Fluorkohlenstoffharz, wie Polytetrafluoräthylen (Teflon).

**Patentansprüche**

1. Matrizenschweißspule zum Verbinden von Tubenrohrkörpern aus Verbundfolien mit metallischer Sperrschicht mit einem Tubenkopf durch Hochfrequenzinduktionsschweißen, bestehend aus einer mit einer axialen Bohrung (2) versehenen zylindrischen, als Preßwerkzeug dienenden Formmatrize (1) und einer hohlen, gegebenenfalls an eine Kühlmittelquelle anschließbaren mehrwindigen Induktionsspule (4), dadurch gekennzeichnet, daß die Formmatrize (1) aus einem Nichteisenmetall besteht und einen radialen Schlitz (12) aufweist und die Spule (4) mit etwa einer Windungslänge mit der Formmatrize (1) elektrisch leitend verbunden ist, wobei diese eine Windung (5) den Schlitz (12) elektrisch nicht überbrückt.

2. Matrizenschweißspule nach Anspruch 1, dadurch gekennzeichnet, daß der Schlitz (12) mit einer elektrisch nicht leitenden Füllmasse (13) gefüllt ist.

3. Matrizenschweißspule nach Anspruch 1 oder 2, dadurch gekennzeichnet, daß die Matrize (1) eine konische Oberfläche (3) aufweist, auf der die Induktionsspule (4) spiralförmig angeordnet ist.

4. Matrizenschweißspule nach einem der Ansprüche 1 bis 3, dadurch gekennzeichnet, daß die Spule (4) und die Matrize (1) jeweils als eine Einheit ausgeführt und relativ zueinander beweglich angeordnet sind.

5. Matrizenschweißspule nach einem der Ansprüche 1 bis 4, dadurch gekennzeichnet, daß die Formmatrize (1) geteilt ist und mindestens aus einem oberen Teil (1a) und einem unteren Teil (1b) besteht.

6. Matrizenschweißspule nach einem der Ansprüche 1 bis 5, dadurch gekennzeichnet, daß die Matrize (1) Kanäle (14) zum Durchfluß eines Kühlmittels enthält.

7. Matrizenschweißspule nach einem der Ansprüche 1 bis 6, dadurch gekennzeichnet, daß die Matrize (1) mit einer Führungshülse (15) mit konisch gestalteter Eingangsöffnung aus einem elektrisch nicht leitenden Material verbunden ist.

8. Matrizenschweißspule nach einem der Ansprüche 1 bis 7, dadurch gekennzeichnet, daß an der dem Schulterteil des Tubenkopfes zugewandten Innenseite der Matrize (1) eine Isolierrondelle (10) vorgesehen ist.

9. Matrizenschweißspule nach Anspruch 8, dadurch gekennzeichnet, daß die Isolierrondelle (10) zwischen dem oberen Teil (1a) und dem unteren Teil (1b) der Formmatrize (1) klemmend befestigt ist, wobei die beiden Teile (1a) und (1b) lösbar miteinander verbunden sind.

## Claims

1. Welding form provided with a coil for connecting tube bodies made up of composite films comprising a metallic barrier layer to a tube head by high-frequency induction welding, consisting of a cylindrical form (1) provided with an axial bore (2) and serving as compression tool, and of a hollow induction coil (4) with several windings which may be connected to a coolant source, characterized in that the form (1) consists of a non-ferrous metal and has a radial slot (12), and the coil (4) is connected electrically conductively to the form (4) by about the length of one turn, where this one turn (5) does not electrically bridge the slot (12).

2. Welding form according to Claim 1, characterized in that the slot (12) is filled with an electrically non-conductive filling material (13).

3. Welding form according to Claim 1 or 2, characterized in that the form (1) has a conical surface (3) on which the induction coil (4) is arranged in spiral form.

4. Welding form according to one of Claims 1 to 3, characterized in that the coil (4) and the form (1) are each formed as a unit and are arranged for movement in relation to one another.

5. Welding form according to one of Claims 1 to 4, characterized in that the form (1) is divided and consists at least of an upper part (1a) and a lower part (1b).

6. Welding form according to one of Claims 1 to 5, characterized in that the form (1) comprises passages (14) for the flow of a coolant.

7. Welding form according to one of Claims 1 to 6, characterized in that the form (1) is connected to a guide sleeve (15) comprising an entrance of conical configuration and of an electrically non-conductive material.

8. Welding form according to one of Claims 1 to 7, characterized in that an insulating washer (10) is provided on the inner side of the form (1) facing to the shoulder part of the tube head.

9. Welding form according to Claim 8, characterized in that the insulating washer (10) is secured by clamping between the upper part (1a) and the lower part (1b) of the form (1), the two parts (1a) and (1b) being detachably connected with one another.

## Revendications

1. Matrice de soudage comprenant une bobine, destinée à assembler par soudage par induction à haute fréquence, des corps tubulaires faits de feuilles composites comprenant une couche d'arrêt métallique, composée d'une matrice de moulage (1) cylindrique, munie d'un perçage axial (2) et servant d'outil de moulage, et d'une bobine d'induction (4) à plusieurs spires, creuse, et éventuellement raccordable à une source de fluide de refroidissement, caractérisée en ce que la matrice de moulage (1) est faite d'un métal non ferreux, et présente une fente radiale (12), et que la bobine est fixée sur une matrice par une liaison conductrice de l'électricité, sensiblement sur une longueur de spire, cette spire (5) ne présentant aucun pontage conducteur de l'électricité sur la fente (12).

2. Matrice de soudage selon la revendication 1, caractérisée en ce que la fente (12) est occupée par une matière de remplissage (13) non conductrice de l'électricité.

3. Matrice de soudage selon l'une des revendications 1 et 2, caractérisée en ce que la matrice de moulage (1) présente une surface conique (3) sur laquelle la bobine d'induction (4) est disposée en spirale.

4. Matrice de soudage selon l'une des revendications 1 à 3, caractérisée en ce que la bobine (4) et la matrice (1) sont réalisées chacune sous la forme d'une unité, et sont disposées de façon à pouvoir se déplacer l'une par rapport à l'autre.

5. Matrice de soudage selon l'une des revendications 1 à 4, caractérisée en ce que la matrice de moulage (1) est divisée, et est composée d'au moins une partie supérieure (1a) et d'une partie inférieure (1b).

6. Matrice de soudage selon l'une des revendications 1 à 5, caractérisée en ce que la matrice (1) renferme des canaux (14) pour la circulation d'un agent de refroidissement.

7. Matrice de soudage selon l'une des revendications 1 à 6, caractérisée en ce que la matrice (1) est réunie à un manchon de guidage (15) fait d'une matière non conductrice de l'électricité, et qui présente une ouverture d'entrée de forme conique.

8. Matrice de soudage selon l'une des revendications 1 à 7, caractérisée en ce qu'une rondelle isolante (10) est prévue sur la face interne de la matrice (1) qui est dirigée vers la partie épaulement de la tête de tube.

9. Matrice de soudage selon la revendication 8, caractérisée en ce que la rondelle isolante (10) est fixée par serrage entre la partie supérieure (1a) et la partie inférieure (1b) de la matrice de moulage (1), les deux parties (1a et 1b) étant réunies l'une à l'autre par une liaison démontable.

Fig. 1

Fig. 2

Fig. 3